# EUROPEAN PATENT APPLICATION

(11) **EP 1 688 877 A1**
(43) Date of publication of application: **09.08.2006**
(21) Application number: 06100203.6
(22) Date of filing: 10.01.2006
(51) Int. Cl.: G06Q 10/00, G06Q 30/00

(54) **Method for communicating within social groups**

(30) Priority: 03.02.2005 US 50513
(71) Applicant: MICROSOFT CORPORATION, Redmond, Washington 98052-6399 (US)
(72) Inventor: Roseway, Asta J., 98052, Redmond (US); Irving, Blake J., 98052, Redmond (US); Makoski, Daniel J., 98052, Redmond (US); Chung, Eunkyung, 98052, Redmond (US); Hall, Martin J., 98052, Redmond (US); Zaner-Godsey, Melora, 98052, Redmond (US); Savage, Tammy L., 98052, Redmond (US)
(74) Representative: Zimmer, Franz-Josef

(57) **Abstract**

Strategies are described for propagating and responding to announcements within an environment having pre-established social groups, such as pre-established instant messenger social groups. More specifically, a member within a group can create an announcement, whereupon the announcement becomes associated with the member's identity.. The member can then propagate that announcement out as part of their identity to members within the member's immediate social order group. If the member so authorizes, the announcement can also be propagated out to other social groups linked to the member's immediate social group. A member within the immediate social group or one of the linked social groups can responds to the announcement. The use of pre-established social groups to transact announcement-related exchanges provides a level of trust not offered by conventional network-based messaging and merchandising services.

## Description

### TECHNICAL FIELD

This subject matter relates to strategies for handling electronic announcements. In a more particular implementation, this subject matter relates to strategies for propagating and consuming electronic announcements in a network environment.

### BACKGROUND

The Internet and other Wide Area Networks (WANs) support a number of marketplace-oriented services. These services allow users to offer articles for sale and to purchase articles posted by other users. One particularly popular marketplace service of this type is eBay Inc. of San Jose, California. In accordance with its own description as "The World's Online Marketplace®," eBay allows any user to post goods or services for sale by virtually anyone with access to the Internet. For instance, any user can browse for goods or services by entering key terms that describe the goods or services that the user is seeking. Upon identifying an item of interest, the user may enter a bid for that item, and if that bid is successful, purchase the item.

The wide reach of services like eBay has certain advantages, as it provides a very large collection of items from which bidders may select. Nevertheless, this feature also has drawbacks. For certain transactions, users are often reluctant to post a message to a large anonymous pool of recipients. For instance, a user may be hesitant to conduct business with untrusted strangers, or may be hesitant to sell certain articles of a personal or sentimental value to strangers, and so forth. These concerns are heightened in online dating scenarios where the user wishes to find a companion; in these cases, the user may be very hesitant to post biographical information to an unrestricted pool of recipients due to various privacy and safety concerns.

Conventional online marketplace services and online dating services attempt to address these concerns by giving users some measure of the trustworthiness associated with its participants. For example, eBay provides a feedback mechanism which allows users to log their experience in dealing with different buyers and sellers. This thereby alerts other users to potentially dishonest, unreliable or otherwise undesirable participants. Yet this mechanism does not fully address the type of concerns outlined above. Even if the marketplace service conveys some measure of the trustworthiness of online participants, it does not change the fact that the user is otherwise dealing with faceless strangers.

For at least the above-identified reasons, there is an exemplary need for more satisfactory strategies for propagating and consuming announcements in a network environment.

### SUMMARY

According to one exemplary implementation, a method is described for communicating within an environment having pre-established social groups, comprising: (a) creating an announcement by a member of a first-order social group, the member being referred to as a announcement-originating member; (b) associating the announcement with an identity of the announcement-originating member; and (c) propagating the announcement to at least other members of the first-order social group.

Additional exemplary implementations are described in the following.

### BRIEF DESCRIPTION OF THE DRAWINGS

Fig. 1 shows an exemplary network environment in which announcement-related functionality can be employed.
Fig. 2 shows an overview of exemplary announcement-related functionality for propagating and consuming announcements within the network environment of Fig. 1.
Fig. 3 shows an exemplary system that can be used to implement the announcement-related functionality of Fig. 2.
Figs. 4-7 show different exemplary user interface presentations that can be produced by the announcement-related functionality of Fig. 2.
Figs. 8 and 9 show two flowcharts which set forth exemplary procedural aspects of the announcement-related functionality of Fig. 2.
Fig. 10 shows an exemplary computer environment for implementing aspects of the announcement-related functionality of Fig. 2.

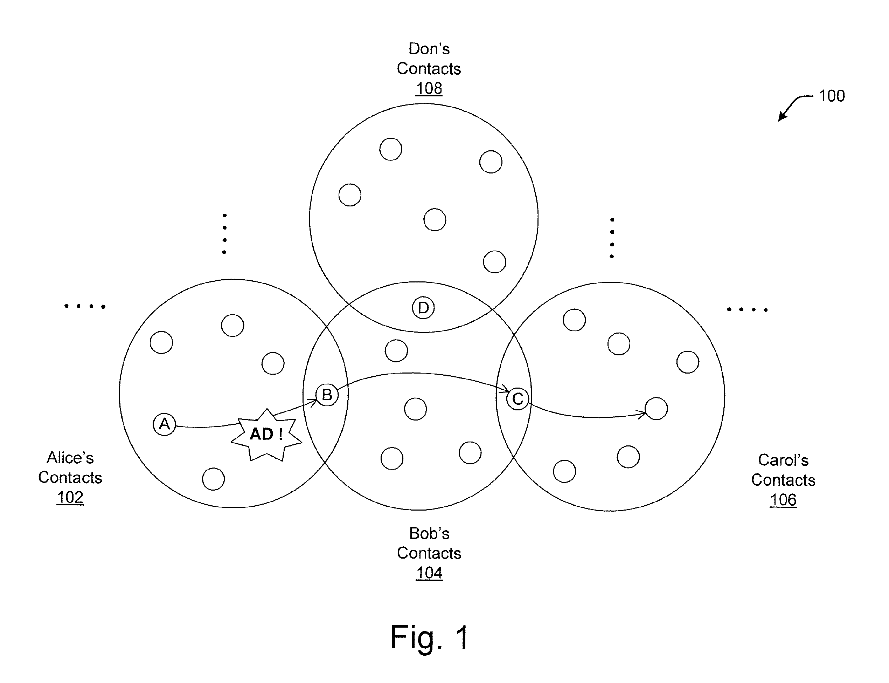

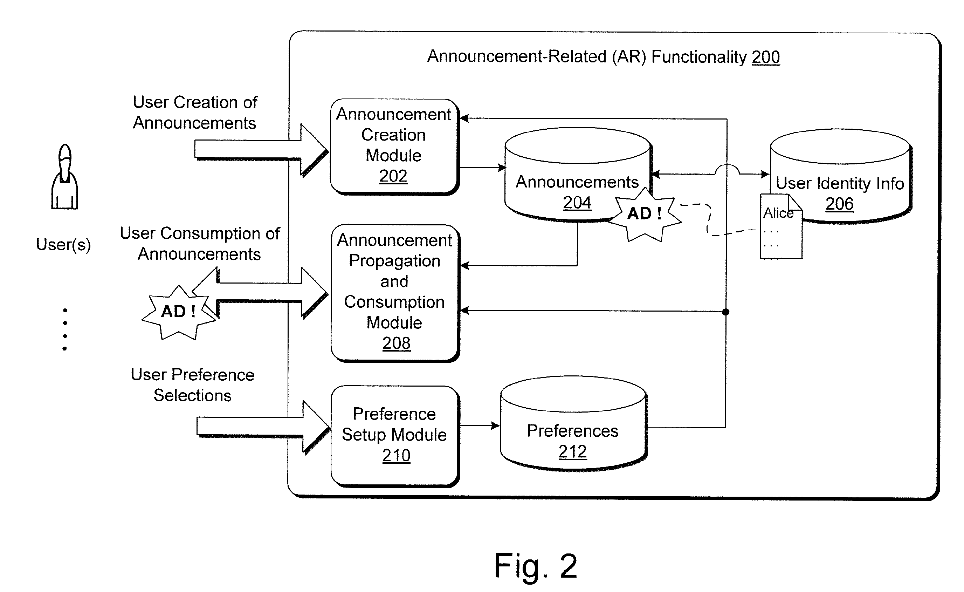

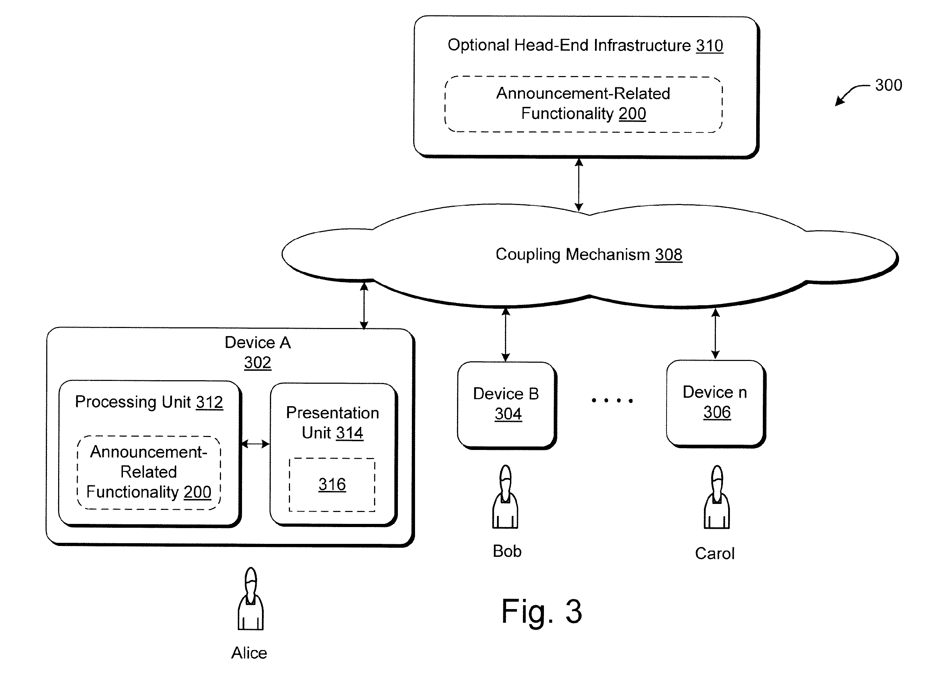

The same numbers are used throughout the disclosure and figures to reference like components and features. Series 100 numbers refer to features originally found in Fig. 1, series 200 numbers refer to features originally found in Fig. 2, series 300 numbers refer to features originally found in Fig. 3, and so on.

### DETAILED DESCRIPTION

The following description sets forth announcement-related (AR) functionality for propagating and consuming announcements in a network environment. To allay the type of concerns mentioned in the Background section, the AR functionality conducts the exchange of announcements in the context of one or more pre-established social groups of users. For example, a user who is a member of a pre-established social group can post an announcement to others members within that immediate social group. The members of that social group can then respond to the announcement or otherwise interact with the announcement.

According to another feature, the AR functionality links the created announcement with the identity of the member who has created the message (referred to herein as the "announcement-originating member"). The AR functionality can alert other members to the existence of the announcement by providing announcement-related (AR) information wherever contact information associated with announcement-originating member would normally appear, or through some other notification channel. For example, consider the illustrative case in which the immediate social group corresponds to an instant messenger "buddy list." The AR functionality can display a symbol that identifies the existence of the announcement next to the alias of the announcement-originating member in the buddy list. A member in the group can investigate and respond to the announcement by activating the symbol.

According to another feature, each of the members within the immediate social group may be members of other social groups. As such, the announcement-originating member may optionally authorize the dissemination of the announcement to the contacts of the members within the immediate social group (referred to herein as "contacts of contacts" or "second-order contacts"). More generally, the user can authorize the dissemination of the announcement to an arbitrary chain of contacts, and, in this, manner, define the scope of the audience that will receive the announcement. Users that wish to browse the announcements of other members can restrict their searches in an analogous manner, that is, by viewing only announcements posted by members of their own immediate social group or higher-order linked social groups (e.g., contacts of contacts, and so forth).

According to another exemplary feature, the AR functionality can provide supplemental information regarding the trustworthiness of participants by providing a reliability score associated with the participants. Users can review the reliability score to determine whether it is safe or otherwise prudent to conduct business with a particular participant.

The strategies described herein confer a number of benefits. According to one benefit, the use a pre-established network of social groups gives the user a large amount of control of the online audience with which they conduct announcement-related transactions (either posting announcements or replying to others' announcements). For instance, a user who wishes to post the announcement to a relatively intimate group of users can restrict the announcement to his or her immediate social group (also referred to as the first-order social group). A user who wishes to reach a larger audience with a less personal announcement may opt to disseminate the announcement to second-order social groups, third-order social groups, etc., possibly up to an entire pool of participants in a network. This feature thereby empowers the users to achieve a level of trust that they deem appropriate for conducting different transactions. By contrast, conventional online marketplaces are designed with the opposite goal in mind, namely to invariably broadcast a user's posting to the largest and most unrestricted audience possible.

The use of existing social networks in conjunction with the ability to govern how "far" an announcement is disseminated into the social networks will potentially encourage more users to engage in online marketplace activity - particularly in those cases where the users are primarily concerned with privacy issues and/or the trustworthiness of participants. As to this point, the potential popularity of this service may hinge on the degree to which it naturally complements the user's normal (offline) preferences when conducting business or handling personal matters; in many cases, the user might want to broadcast their needs to a large audience, but it in many other cases, the user will prefer a more intimate audience within which to conduct their transaction.

According to another benefit, the pairing of AR information and the user's identity provides a seamless way of interjecting announcements wherever the user's identity information would normally appear.

Additional features and attendant benefits of the strategies will be set forth in this description.

As to terminology, the term "announcement" refers to any kind of message that can be transmitted to one or more recipients. Commonly, an announcement may be framed as an offer or request directed to other members. For instance, a user can use an announcement to propagate a sales offer (where the user is selling a specific article or service, or offering to buy a specific article or service). Or a user can use an announcement to make a more general (less formal) sales-related inquiry. Other messages may have not have a sales connotation, such as a request for advice regarding a particular topic (e.g., a request for information regarding a vacation destination, or so forth). In a dating scenario, an announcement may comprise targeted information with the aim of attracting a suitable companion. These are merely illustrative examples; in general, an announcement can contain any kind of content for use in any context.

The term "social groups" refers to any aggregation of members for any purpose. Commonly, a social group will be bound by friendship. Other social groups may be bound by a work relationship, family relationship, academic relationship, and so forth. Common mechanisms for establishing such groups include instant messenger applications which allow the user to establish buddy lists, Email mechanisms which allow the user to establish contact lists, and so forth.

The term "order" is used to define the relationship among social groups. For instance, a user may disseminate an announcement to his or her immediate group of contacts, which is referred to as the first-order social group. As stated above, a member of the first order social group may belong to other social groups, and members in these other social groups are associated with yet other social groups, and so on. A second-order social group refers to a group that is related to a user by two "hops" from the user to members within that second order social group. That is, for example, Alice my post an announcement to her friend Bob, who forwards the announcement to his friend Carol; since there are two "hops" to reach Carol, the social group binding Alice to Carol is a second-order social group. Higher order social groups can be reached by further advances outward along the linked associations of groups.

This disclosure includes the following sections. Section A presents exemplary systems for propagating and consuming announcements. Section B describes various user interface presentations that can be used in conjunction with the systems of Section A. Section C presents a series of flowcharts which describe the operation of the systems of Section A. Section D describes an exemplary computer environment for implementing aspects of the systems of Section A.

### A. Exemplary Systems (Figs. 1-3)

Generally, any of the functions described with reference to the figures can be implemented using software, hardware (e.g., fixed logic circuitry), manual processing, or a combination of these implementations. The term "logic, "module" or "functionality" as used herein generally represents software, hardware, or a combination of software and hardware. For instance, in the case of a software implementation, the term "logic," "module," or "functionality" represents program code that performs specified tasks when executed on a processing device or devices (e.g., CPU or CPUs). The program code can be stored in one or more computer readable memory devices. More generally, the illustrated separation of logic, modules and functionality into distinct units may reflect an actual physical grouping and allocation of such software and/or hardware, or can correspond to a conceptual allocation of different tasks performed by a single software program and/or hardware unit. The illustrated logic, modules and functionality can be located at a single site (e.g., as implemented by a processing device), or can be distributed over plural locations.

### A.1. Exemplary Linked Social Group Environment

Fig. 1 shows a portion of an exemplary network environment 100 that can be used to propagate and consume announcements. The environment 100 includes four intersecting social groups. An immediate social group 102 is defined by a member A (Alice). Namely, in the context of an instant messenger (IM) application, Alice defines the members of the immediate social group 102 by creating a buddy list that identifies the aliases of the members. Alternatively, in an Email application, Alice can define a group of individuals in her contact list. Still other mechanisms can be used to define the membership of the immediate social group 102. In any event, each of the circles in the immediate social group 102 defines a member in the group. The reader will appreciate that the number of members shown in Fig. 1 may represent only a subset of a much larger group of members (or possibly smaller groups of members).

One of the members in the social group 102 defined by Alice is member B (Bob). Bob, on the other hand, has defined his own list of contacts, which collectively constitutes another social group 104. Two members in Bob's second social group are member C (Carol) and member D (Don). Carol has defined her own list of contacts, which collectively constitutes another social group 106. Don has defined his own list of contacts, which collectively constitutes yet another social group 108. The reader will appreciate that each of the members (represented by circles) in any of the social groups may create their own respective social group; accordingly, in an actual application, the social groups will expand outward with many more branches than is shown in Fig. 1.

Fig. 1 also serves as a vehicle for illustrating the manner in which announcements can be propagated and consumed. Consider a first scenario in which Alice creates an announcement for dissemination to other members. In a first case, Alice may want to restrict the dissemination of the announcement to her immediate social group 102. In this case, the announcement-related (AR) functionality (to be described in the next subsection) will propagate the announcement to only those members enclosed within the immediate social group 102. In a second case, however, Alice may want to disseminate the announcement to a wider audience. In this application, the AR functionality allows Alice to specify a target audience by defining a maximum number of relationship "hops" over which the announcement can be propagated. For instance, if Alice specifies that the announcement should be disseminated to second-order social groups, then the AR functionality will propagate the announcement to only social group 104 (while keeping in mind that there might be many other second-order social groups that Fig. 1 does not depict). If Alice specifies that the announcement should be disseminated to third-order social groups, then the announcement functionality will propagate the announcement to social group 104, social group 106, and social group 108 (among possibly many other social groups not shown in Fig. 1).

Consider next a second scenario in which Alice wishes to consume an announcement created by another user. The same flexible mechanism described above can be used to restrict the target audience that is made available to Alice. In a first case, Alice may want to restrict the pool of announcements that are presented to her immediate social group 102. In a second case, Alice may want to expand the pool of announcements that are available to her to second and third-order member groups, which would encompass the groups 104, 106 and 108. Regardless of Alice's viewing selections, Alice can only access those announcements which the announcement-originating members have configured to be viewed by Alice's social group. Thus, presume that a member in the third social group 106 has created an announcement, but has restricted its dissemination to only the third social group 106. Thus, even though Alice may have extended the reach of her search to third-order social groups, Alice cannot view this announcement.

In one implementation, the AR functionality is configured to propagate a full set of AR information to the immediate social group, and the same full set of AR information to higher-order social groups. In another implementation, the AR functionality is configured to propagate a full set of AR information to the immediate social group, but only a subset of the full set to higher-order social group. The latter implementation may be valuable in those cases where the announcement-originating member wishes to restrict the amount of information transmitted to "remote" users for privacy or security reasons (because the user may be less sure of the trustworthiness of members that the user does not directly know). One might also envision a case, albeit uncommon, where the user wishes to provide more information to remote contacts, compared to the user's immediate social group, e.g., where the user wishes to conceal potentially embarrassing details from people that know her best, etc. The user might wish to bypass the user's immediate social group entirely in some, albeit uncommon, circumstances (e.g., where the user wishes to purchase a gift for a close friend, and wishes to consult friends of that friend for advice).

### A.2. Exemplary Announcement-Related (AR) Functionality

Fig. 2 shows an overview of AR functionality 200. Fig. 2 depicts the components of the AR functionality 200 as an integrated unit to facilitate explanation. However, as will be described shortly with respect to Fig. 3, the components of the AR functionality 200 can be implemented in different ways. In a first case, the AR functionality 200 can be implemented entirely at a client level within the devices used by individual users. In a second case, the AR functionality 200 can be implemented entirely within head-end infrastructure (such as within one or more head-end server machines). In yet a third case, the AR functionality 200 can be implemented by a distribution of components in both the client devices and the head-end infrastructure. Fig. 2 thus serves mainly as an explanation of the functions performed by the AR functionality 200 and the interrelation of those functions, which may map to different physical implements in different ways.

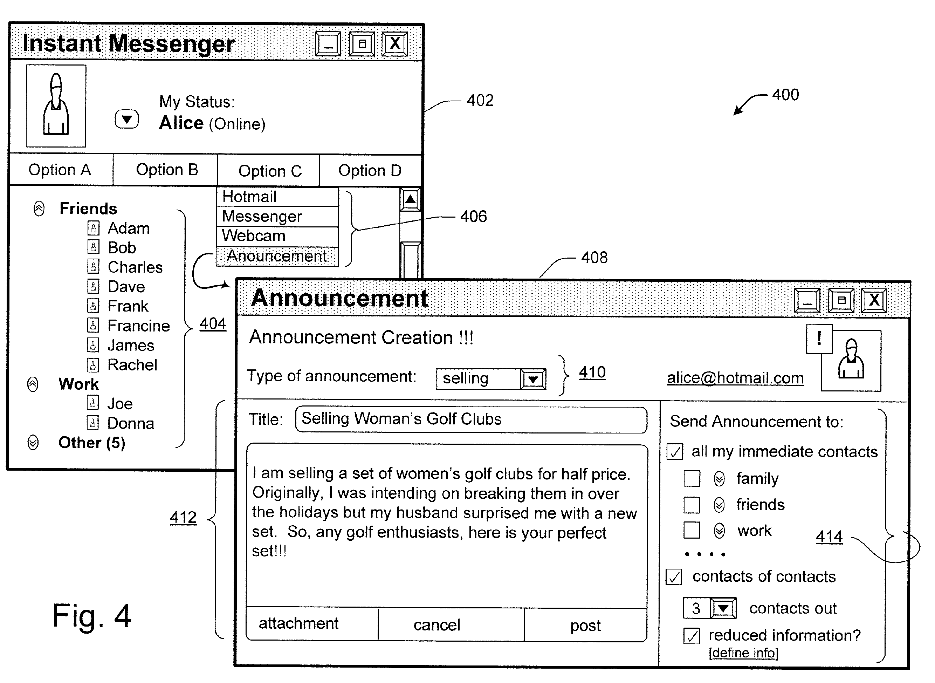

One component of the AR functionality 200 is an announcement creation module 202. As the name suggests, the announcement creation module allows a user to create an announcement. Fig. 4, to be discussed in turn, shows one exemplary user interface presentation that can be used to create an announcement. The announcement creation module 202 can store the thus-created announcement in an announcement store 204.

The announcement is preferably closely associated with the identity of the announcement-originating user (e.g., in a manner similar to a "buddy icon," which is paired with the identity of user's alias and appears along with that alias). For this reason, the announcement can be stored as an attribute of the identity of the announcement-originating user. Fig. 2 illustrates this feature by showing a link between the announcement store 204 and an identity store 206 (which stores information pertaining to the identity of the users). These databases (204, 206) can be implemented in various ways. For example, the announcement store 204 and the identity store 206 can be provided entirely by the client devices, or entirely by head-end infrastructure, or by a distributed combination of both the client devices and the head-end infrastructure. In those cases where the stores (204, 206) are provided by a head-end infrastructure, the user may access this information using different devices and platforms, thus allowing access to the announcement functionality in various "roaming" scenarios.

Fig. 2 illustrates a link between the identity of a particular announcement-originating user, Alice, and the announcement which she has created by a dashed curved line. This feature can be implemented in different ways. For example, records in the announcement store 204 can be linked to records in the identity store 206 by reference pointers. Or the announcement store 204 and the identity store can be implemented as a single database, in which case Alice's announcements can represent a field or attribute of her identity record, and so on.

Another component of the AR functionality 200 is the announcement propagation and consumption module 208. As the name suggests, this module 208 provides logic which governs the propagation of announcements out to a target audience, and also governs the consumption of announcements by users. In the context of announcement dissemination, this module 208 will propagate the announcement to only those target audiences defined by the announcement-originating member. A first-order dissemination restriction will result in the propagation of the announcement to only the announcement-originating member's immediate social group. Higher-order dissemination restrictions will result in the propagation of the announcement out to expanded target audiences along the chain of linked social groups. In the context of announcement consumption, the module 208 applies similar restrictions to define how "far" the inquiring user is allowed to probe the linked collection of social groups to view and respond to announcements. In any of these cases, the announcement information is "piggybacked" onto the identity information as an attribute thereof, such that AR information is displayed in association with identity information corresponding to the announcement-originating member. Thus, any application that displays the identity of the announcement-originating member, can also be configured to display the AR information. The AR information can also be presented in the context of other applications; for instance, the AR information need not be "piggybacked" onto pre-existing identity information presentations.

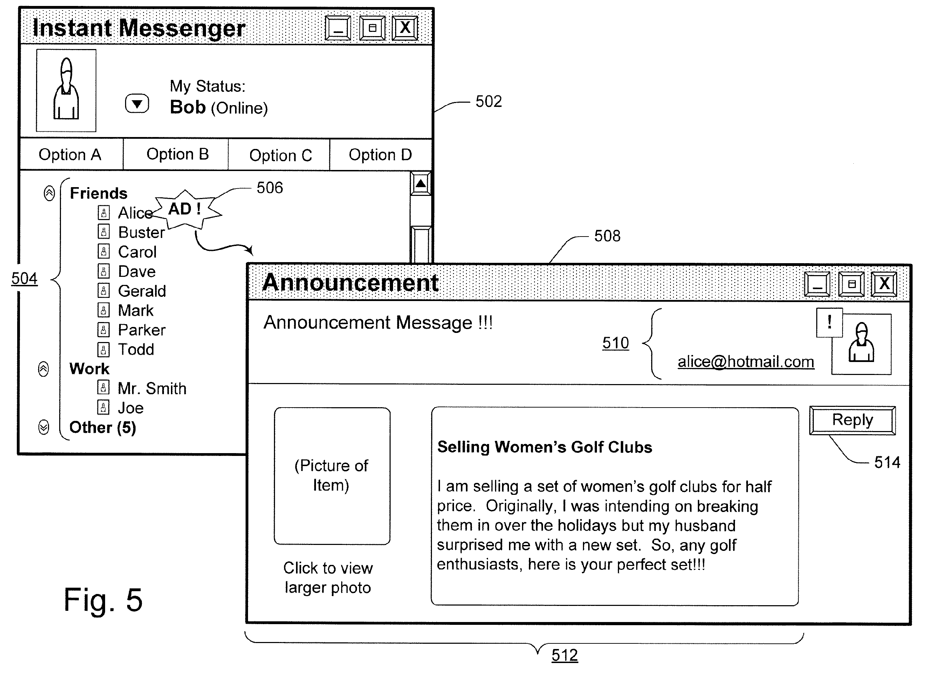

The module 208 also provides the mechanisms by which the inquiring user can search for, access, and respond to announcements. Figs. 5-7, to be discussed in turn, show various user interface presentations that this module 208 can employ to alert users to announcements and then permit users to respond to the announcements.

Finally, the AR functionality 200 can also include a preference setup module 210 for storing preference information in a preference store 212. This module 210 allows the user to enter preference information (such as default setting information) which will govern the operation of either or both the announcement creation module 202 and the announcement propagation and consumption module 208. For instance, the user may want to provide default information that specifies that announcements are to be restricted to the user's immediate (first-order) social group, and so forth. This would eliminate the need for the user to make this selection upon the creation of each announcement.

Fig. 3 shows one exemplary system 300 that can be used to implement the AR functionality 200 of Fig. 2. The system 300 includes a collection of devices (302, 304, ... 306) coupled together via a coupling mechanism 308. The system can provide optional head-end infrastructure 310 for interacting with the devices (302, 304, ... 306) via the coupling mechanism 308.

The coupling mechanism 308 can comprise any mechanism or combination of mechanisms for coupling the components of the system 300 together. For instance, the coupling mechanism 306 can include any kind of network (or combination of networks), such as a wide area network (e.g., the Internet), an intranet, Digital Subscriber Line (DSL) network infrastructure, point-to-point coupling infrastructure, and so on. The coupling mechanism 308 can use or involve any kind of protocol or combination of protocols, such as the Internet Protocol (IP), the Transmission Control Protocol (TCP), the User Datagram Protocol (UDP), the HyperText Transfer Protocol (HTTP), the Simple Object Access Protocol (SOAP), and many potential others. In the case where one or more digital networks are used to disseminate information, the coupling mechanism 308 can include various hardwired and/or wireless links, routers, gateways, name servers, and so on (not shown).

In one case, the devices (302, 304, ... 306) can communicate with each other via a peer-to-peer (P2P) arrangement (which does not rely on switchboard services, etc. in the head-end infrastructure 310). In another case, the devices (302, 304, ... 306) can communicate with each other via the head-end infrastructure 310. In another case, the devices (302, 304, ... 306) can communicate with each other using a combination of P2P and switchboard services.

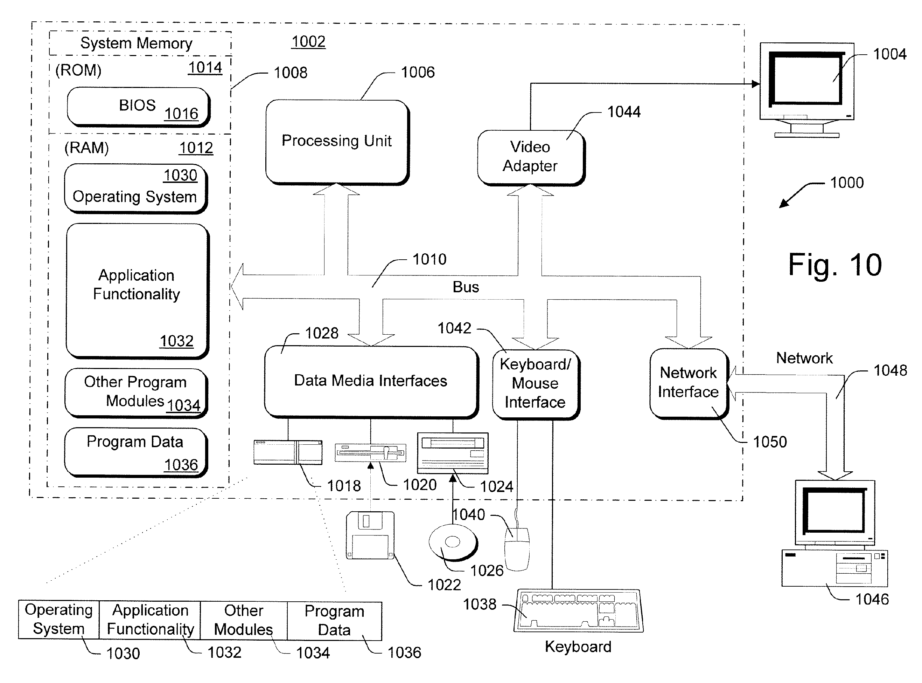

The head-end infrastructure 310 can comprise any combination of equipment for providing services to the client devices (302, 304, ... 306). For instance, the head-end infrastructure 310 can comprise one or more server machines (e.g., a server farm) for providing services to the devices (302, 304, ... 306), as well as one or more databases for storing announcements, identity information, and so forth. The components of the head-end infrastructure 310 can be located at a single site or distributed over plural sites. Where the head-end infrastructure 310 is implemented by server machines, Fig. 10, to be discussed in turn, provides one exemplary computer environment for implementing these machines.

Each client device (302, 304, ... 306) can include any kind of equipment for interacting with other devices and/or the head-end infrastructure 310. In one exemplary case, the client devices (302, 304, ... 306) can correspond to personal computer devices, personal digital assistant (PDA) devices, intelligent mobile phone devices, any kind of transportable or wearable computer device, any kind of game console device (such as Microsoft Corporation's Xbox™ game consoles), and so forth. Where the devices (302, 304, ... 306) are implemented by some kind of computer devices, Fig. 10, to be discussed in turn, provides one exemplary computer environment for implementing these devices.

Fig. 3 shows that representative client module A (302) includes a processing unit 312 coupled to a presentation unit 314. The processing unit 312 comprises any data processing functionality for performing various ascribed tasks, while the presentation unit 314 provides any kind of output mechanism by which a user can interact with the processing unit 312. The presentation unit 314 can provide visual output, audio output, tactile output, any combination of such outputs, and so forth.

Fig. 3 shows that the AR functionality 200 (introduced and described in the context of Fig. 2) can be implemented entirely at the client level by individual client devices (302, 304, ... 306). Or the AR functionality 200 can be implemented entirely at the head-end level by the head-end infrastructure 310 (e.g., as a "Web" application). Or the AR functionality 200 can be implemented by a combination of functionality provided by both the client level and head-end level. For example, in the last-mentioned scenario, the devices (302, 304, ... 306) can store software that performs a subset of prescribed tasks of the AR functionality 200, and the head-end infrastructure 310 can store software that performs another subset of prescribed tasks. The various data stores shown in Fig. 2 (204, 206, 210) can be stored at the client level, the head-end level, or by a distributed combination of the client level and the head-end level.

As to business models, in one exemplary implementation, users can access the AR functionality 200 free of charge. In another exemplary implementation, only subscribing users can access the AR functionality 200 upon paying a prescribed fee. In still another case, users can access the AR functionality 200 by paying a fee for each transaction performed, or by paying a fee for a certain number of transactions (comprising a "pay as you go" scheme). For example, the user can pay a fee for each announcement created.

### B. Exemplary User Interface Presentations (Figs. 4-7)

As indicated in Fig. 3, any of the client devices (302, 304, ... 306) can provide a user interface 316 that allows associated users to interact with the AR functionality 200. The user interface 316 can be used to present user interface presentations based on logic stored on the client level, the head-end level (e.g., as a Web application), or a combination of the client level and head-end level. The user interface presentations can comprise graphical and/or textual content displayed on the presentation unit 314. The users can interface with this content through various input mechanisms, such as keyboard, mouse device, touch screen, and so forth.

Fig. 4-7 provides exemplary user interface presentations that can be used to interact with the AR functionality 200. The reader will appreciate that the style, organization and content of the user interface presentations can be changed to suit different technical and business environments. For instance, where the AR functionality 200 is applied to a wireless network environment, the enabling system may opt to reduce the amount of information in the user interface presentations to accommodate the display of this information on smaller devices (e.g., mobile phones).

To begin with, Fig. 4 shows a user interface presentation 400 for creating an announcement within the context of instant messenger (IM) application. Once again, the implementation of the AR functionality 200 within the context of an IM application is exemplary; for example, the AR functionality 200 can be implemented in any application that involves one or more social groups. Or more broadly, the AR functionality 200 can be applied to any application that displays identity information pertaining to members within one or more social groups.

The user interface presentation 400 includes a first IM pane 402 provided in the normal course by the IM application. The IM pane 402 lists the members in a particular user's - Alice's - buddy list. The list can be divided into conventional member categories, such as family, friends, coworkers, and so forth. For frame of reference, assume that Alice corresponds to entity A shown in Fig. 1. As such, the members in Alice's list correspond to the members within the immediate social group 102 shown in Fig. 1. Each of the members in Alice's list will typically maintain their own buddy lists, associated with other social groups shown in Fig. 1 (such as the social group 104).

In one exemplary and non-limiting application, the IM pane 402 can allow Alice to create an announcement by selecting an appropriate menu option in a pull-down menu 406. In this exemplary case, the pull-down menu 406 identifies various communication-related options, one of which identifies the AR functionality 200. Other techniques for invoking the AR functionality 200 are possible.

Upon invocation of the AR functionality 200, an announcement creation pane 408 is presented. The announcement creation pane 408 includes a first field 410 which identifies the nature of the user's, Alice's, announcement. Possible types of announcements include "selling" (in which the user wishes to sell an article or service), "buying" (in which the user wishes to buy an article or service), or any other kind of message (including messages not related to buying or selling).

A second field 412 in the announcement creation pane 408 allows the user to define the contents of the announcement. The definable fields of an announcement may include its title and its body. Using an "attachment" command, the user may also attach a picture or other information associated with the announcement. For instance, the user may attach a picture of the article or service that the user is selling, or seeks to purchase. Or in a dating scenario, the user may attach a photograph or himself or herself. Another command "cancel" in the second field 412 allows the user to cancel the announcement (whereupon the announcement will not be posted). Another command "post" allows the user to post the announcement after completion.

A third field 414 allows the user to define various criteria which govern the propagation of the announcement. For instance, Alice can specify that the announcement should be forwarded only to her immediate contacts, meaning only those individuals listed on her buddy list. Or Alice can be more specific by restricting the dissemination of the announcement to only certain categories within her buddy list, such as only her family contacts, only her friend contacts, and/or only her work-related contacts.

In addition, or alternatively, Alice can authorize the dissemination of the announcement to contacts of contacts by checking the appropriate boxes within the third field 414. In one implementation, the user can also define how "far out" the announcement should be propagated within the web of social groups. In this case, Alice has selected "2," meaning that the announcement will be disseminated as far out as second-order social groups, such as social group 104 shown in Fig. 1. The third field 414 also allows the user to restrict the amount of AR information that is transmitted outside the user's immediate list of contacts. In ones case, the AR functionality 200 can be preconfigured to extract a subset of information from the full set of announcement information to send to higher-order social groups. In other implementations, the announcement-creation pane 408 (or a linked pane) can allow the user to custom-define the information that will be transmitted beyond her immediate group of contacts (e.g., by activating the "define info" link shown in Fig. 4). In one case, uniform criteria is applied to restrict the amount of information transmitted to all higher-order social groups (e.g., social groups of n^{th} order, where n>1). In another case, it is possible to progressively taper the amount of information this is disseminated to users depending on their relational remoteness from the announcement-originating user.

The above described mechanism for creating an announcement is exemplary and non-limiting. Other mechanisms for creating announcements can use different UI techniques for soliciting information from users. Further, other mechanisms can collect different fields of criteria than those exemplary fields enumerated above. For example, another mechanism (not shown) for creating an announcement can allow the announcement-creating member (Alice) to specify who else, in addition to Alice herself, is permitted to review responses to Alice's announcement. This "can view responses" criterion can be restricted to Alice's first order (immediate) list of buddies, or can be specified using the "degrees out" parameter described above. This feature might be particularly useful in a sales context, where users may be bidding on a particular item being offered for sale by Alice, and therefore would naturally like to know what the prevailing highest bid might be. As another example, assume that Alice's message asks for advice on any topic; here, users may be interested in finding out how others have responded to Alice's message, e.g., to avoid needlessly duplicating what others have said. (Nevertheless, in other circumstances, it might be desirable to deactivate this "can view responses" option to secure the privacy of message exchange.)

In still another implementation, the user who responds to the announcement may be given the option of controlling whether his or her response can be viewed by others in the group besides Alice.

After creating the message, Alice might receive one or more responses to the announcement from members in her social group or a linked social group. Alice can review these responses by activating her announcement and examining any responses associated therewith.

Fig. 5 shows, still in the context of an exemplary and non-limiting IM application, how a user within Alice's social group, Bob, might be alerted to the existence of Alice's message. Assume, for example, that Bob corresponds to entity "B" shown in Fig. 1. The IM pane 502 is displayed when Bob invokes the IM application. The IM pane 502 includes a list 504 of the members of Bob's social group, corresponding to the social group 104 in Fig. 1. Alice is a member of Bob's social group.

The IM pane 502 alerts Bob to the fact that Alice has created an announcement by showing AR information 506 in positional proximity to Alice's alias in the list 504. The specific AR information 506 shown in Fig. 5 is entirely exemplary; any symbol (or sound, etc.) can be used to alert the user that another user has created an announcement. Preferably, though, the AR functionality 200 binds the AR information 506 with identity information associated with the announcement-originating user, such that everywhere the identity information is presented, the AR information 506 is likewise presented in association therewith. Thus, for example, if Bob also included Alice as a contact within an Email application, the AR functionality 200 would display the AR information 506 in association with Alice's contact information to alert Bob to the presence of Alice's announcement. (Although not shown, Alice may include similar AR information associated with her own identity information in her IM panel 402, to alert her to the fact that she has created an announcement, and to serve as a portal for reactivating and examining her announcement and responses associated therewith).

Bob can invoke Alice's announcement in different ways, such as, for example, clicking on the AR information 506. This will prompt the AR functionality 200 to present the announcement pane 508. The announcement pane 508 includes a first field 510 which identifies the announcement-originating member, i.e., Alice. The announcement pane 508 includes a second field 512 which provides the contents of the announcement that Alice defined using the announcement creation pane 408 of Fig. 4. The contents can include a picture associated with the announcement (attached via the "attachment" command of Fig. 4), as well as a textual description associated with the announcement. In this particular case, Alice is selling golf clubs. Thus, the picture might provide a photograph of the clubs that she is selling and the text portion might provide a description of this item. Although not shown, if Alice has activated the above-described "can view responses" option, the announcement presented to Bob can also provide information regarding messages that have been sent by others in response to Alice's announcement. For instance, although not shown, the announcement pane 508 can include a link which provides a portal that allows Bob to view others' responses; alternatively, information regarding others' responses (e.g., the highest bid) can be incorporated into the primary information presented on the announcement pane 508 itself.

A third field 514 of the announcement pane 508 allows Bob to respond to Alice's announcement. Activating this reply function may prompt the display of a special user interface presentation (not shown) that provides further information regarding the item, and/or which allows Bob to make a formal purchase of the item (e.g., by entering credit card information, address information, and so forth). Alternatively, or in addition, the reply function may establish a communication session with Alice (if Alice is online) so that Bob can personally complete the sales transaction with Alice via an IM session.

Recall that Alice has defined the "reach" of her message to extend out to second-order social groups, which would allow the message to also be disseminated to Bob's contacts in list 504. Consider the case where Carol, a member of Bob's list 504, is also online at the time. Further assume that Alice is not a member of Carol's own buddy list. In this circumstance, the AR functionality 200 can rely on various mechanisms to alert Carol to the existence of Alice's message. In one case, Carol's IM pane (not shown) can display anonymous AR information, which indicates that someone on her buddy list has a contact who has generated a message (or someone "further back" in the chain of relationships has generated an announcement). Carol's IM pane can display the anonymous AR information next to Bob's identity information, which would at least alert Carol to the fact that Bob is the last link in the path from the announcement-originating member to Carol. In another case, Carol's IM pane can include a separate "temporary guest" section that temporally displays the AR information from remote contacts (such as Alice) in the manner of a pop-up alert (which Carol can optionally disable). The AR information in this special section can optionally identify the announcement-originating member if possible. In another case, the AR functionality 200 can entrust each linking member along the path to authorize the forwarding of information regarding the announcement. In this scenario, the AR functionality 200 will propagate Alice's announcement to Carol only if Bob authorizes such a transmission. In another case, the IM functionality may permit a user who receives an announcement from someone not included in the user's buddy list to formally add the announcement-originating member to the user's buddy list, or at least to a special category of the buddy list (e.g., a "remote AR contact" list). In any case, when Carol activates the AR information, the AR functionality 200 can provide the same announcement pane 508 that was presented to Bob (or some modified rendition of this pane 508 containing a subset of the information that was presented to Bob).

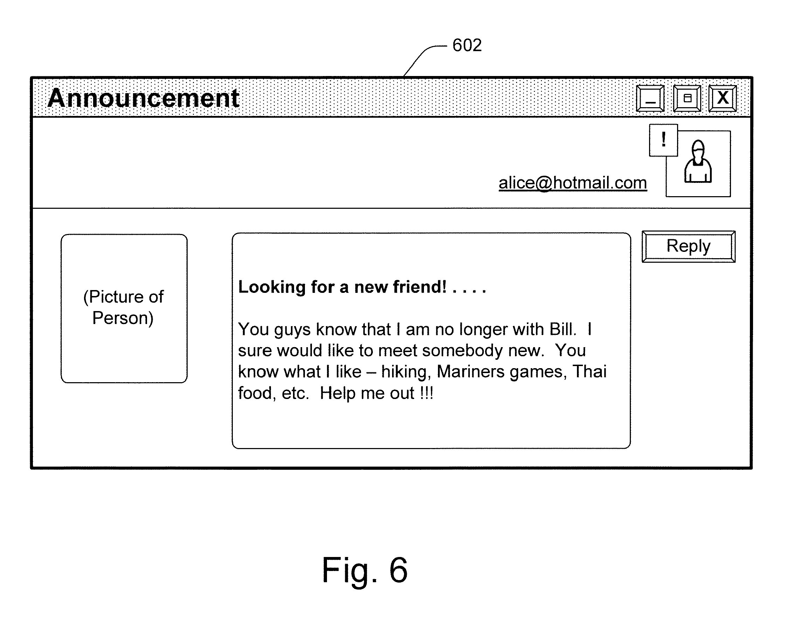

The above-described examples involve marketplace-related applications, where Alice is interested in selling an article or service. However, the AR functionality 200 can be used to create any kind of announcement, such as a request to purchase an article or service, or a general request for information. Fig. 6 shows still another application related to online matchmaking, where Alice has generated an announcement 602 that asks her friends whether they know of anyone that she might date. The online dating scenario is a particularly apt application of the AR functionality 200, as users may be very reluctant to post personal information in an anonymous dating database, accessible to a large and unrestricted population of participants. But the user may be more comfortable with entrusting his or her friends with dating-related requests, as many people normally rely heavily on friends and family to find suitable companions.

The AR functionality 200 can provide other mechanisms for alerting users of posted announcements and responses to posted announcements, and for presenting the announcements and responses to the users. For example, the AR functionality 200 can use any kind of delivery platform (or any combination of delivery platforms) to deliver the announcements, such as local area network, wide area network, wireless communications network (e.g., via SMS/MSS services provided by a cellular network, or similar messaging services), manual delivery of announcement-bearing physical media via regular mail or courier, and so forth. Further, the AR functionality 200 can use any mechanism (or combination of mechanisms) for alerting the users to AR information and then presenting the announcements, such by presenting graphical information (including static and/or animated graphical information), video information (such as video clips that present the contents of the announcements), audio information, tactile information, and so forth. Further, the AR functionality 200 can integrate such AR information into any application provided by a receiving device in any manner. For example, the receiving device can integrate AR information into an Email application, voice-over-digital-network application, any kind of IP browser-related service, and so forth. Or the receiving device can provide AR information via a "standalone" messaging service (e.g., available through the user's desktop) that is solely devoted to the AR functionality 200.

Finally, it should be noted that the examples set forth above involve the presentation of AR information in association with identity information pertaining to users (e.g., in the context of a buddy list or contact list), e.g., by "piggybacking" the AR information onto the pre-existing identity information. However, other applications do not provide identity information as part of their normal services. In these cases, the AR functionality 200 can present the AR information by adding such identity information as a supplemental feature of these applications. Or the AR functionality 200 can present AR alerts in a manner which is decoupled from formal buddy lists or contact information, e.g., by providing "standalone" pop-up messages (and the like) which alert the users when an AR message has been posted.

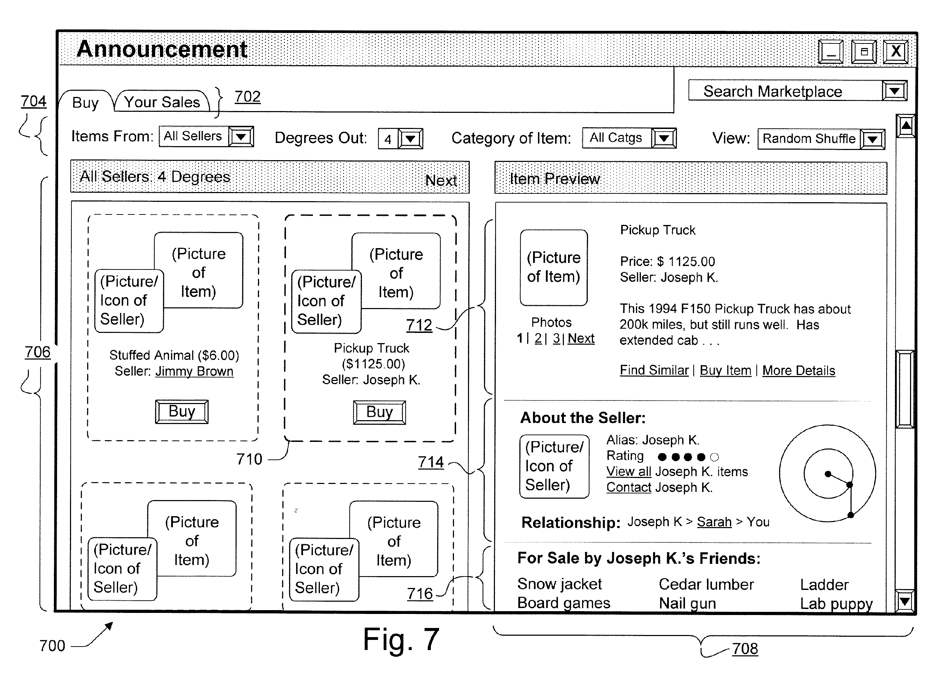

The above implementations describe the exchange of AR information on an announcement-by-announcement basis. However, alternatives are envisioned. Fig. 7, for instance, shows one exemplary marketplace pane 700 that allows the user to make a more comprehensive investigation of posted announcements compared to the examples of Figs. 5 and 6. In the following discussion, the user who is interacting with the marketplace pane 702 is referred to as the "inquiring user."

A first field 702 in the marketplace pane 702 allows the inquiring user to select a topic of interest, e.g., whether the inquiring user wishes to view sales announcements created by others or the user's own sales announcements. In the case of Fig. 7, the inquiring user has opted to view the announcements created by others (by selecting a "Buy" page). If the inquiring user opts to view the user's own announcements, the AR functionality 200 can also provide information regarding responses that have been received from users pertaining to the announcements.

A second field 704 in the marketplace pane 702 allows the inquiring user to define the criteria that will be used to cull a subset of the available announcements from a total number of announcements. In this field 704, a first "Items From" criterion allows the inquiring user to filter the announcements on the basis of the characteristics of announcement-originating member. A first class of members may correspond to the inquiring user's immediate social group (e.g., the first-order social group). Other classes of members may pertain to successively higher-order social groups. The "Items From" criterion can also allow the inquiring user to define the category of user they wish to view announcements from, such as family, friends, co-workers, and so forth. A "Degrees Out" criterion allows the inquiring user to define how far out in the chain of relations that the AR functionality 200 will reach to retrieve announcements. In the illustrated case of Fig. 7, the inquiring user has selected "All Sellers" for the "Items From" criterion and "4" for the "Degrees Out" criterion, meaning that the inquiring user wishes to view announcement created by any member within any social group extending out to fourth-order social groups (which might very well define a net that encompasses several hundred contacts). Through these fields, the inquiring user can effectively cull a collection of announcements from the announcement store 204 based on a desired level of trust. For instance, this search mechanism allows the user to review the announcements from a relatively intimate group of announcement-originating members (e.g., the first-order group), or a more expansive group of members (e.g., including, potentially, all of the announcements in the announcement store 204). Fig. 7 shows exemplary drop-down selection mechanisms for inputting criteria in these fields, although other control mechanisms can be used, such as various kinds of graphical mechanisms for specifying the "Degrees Out" criterion (e.g., a sliding bar control, knob-type control, and so forth). Another way of specifying the "Degrees Out" criterion is via a series of concentric rings, where each ring designates a degree of separation between the inquiring user and the announcement-originating member. The inquiring user (represented by the center of the rings) could specify a desired level of trust by selecting (e.g., clicking on) a desired concentric ring.

Another criterion in the second field 704 allows the inquiring user to specify the category of items that the inquiring user wishes to view, such as electronic goods, clothing, music, and so forth.

Another criterion in the second field 704 allows the inquiring user to define the manner in which announcements will be presented in the pane 702. For a random shuffle option, the AR functionality 200 can present a random subset of announcements that meet the criteria defined in the second field 702. Alternatively, the AR functionality 200 can rank the items based on how recently they were created, price range, degree of relationship (e.g., items from immediate contacts prior to more remote contacts), and so forth.

A third field 706 provides a description of the matching items that meet the above-defined search criteria. This field 706 can present any kind of information that describes the announcements, including graphical information, textual information, or a combination thereof. In the exemplary case of Fig. 7, the third field 706 provides, for each announcement, a picture of or icon association with the seller of the item, a picture of the item, a textual description of salient features of the item, and a command button to initiate purchase of the item. The inquiring user can sequence through different panes of the third field 706 by activating a "Next" command at the top right of this field 706. In the event that the random shuffle criterion has been selected, the Next command will prompt the AR functionality 200 to provide another random subset of available items for review.

A fourth field 708 shows more specific information regarding a selected one of the items shown in the third field 706. In this case, the inquiring user has selected an item 710 pertaining to a vehicle for sale by a seller Joseph K. As such, the fourth field 708 provides additional information regarding the vehicle and its seller. Namely, the topmost section 712 of the fourth field 708 provides additional information regarding the vehicle itself. Such addition information can include additional photographs of the vehicle, as well as an expanded textual description of the vehicle. This section 712 can also provide a conduit that allows the inquiring user to find similar items, purchase the item, or retrieve yet further information regarding the item.

The middle section 714 of the fourth field 708 provides additional information regarding the seller, Joseph K. The additional information may include a picture of the seller as well as rating information associated with the seller. The rating information may reflect feedback received from other purchasers who have dealt with this seller, thus reflecting their experience - good, bad, or neutral - in dealing this seller. The inquiring user can therefore make a more informed judgment whether it is prudent to buy from this seller. This might be valuable in those cases where the inquiring user does not know the seller, such as might be the case where the seller is from a relatively high-order social group.

The middle section 714 also optionally provides information that identifies how the seller is linked to the inquiring user. This can be represented textually by a string of aliases that defines the links between the seller and the inquiring user. In this case, the links are: "Joseph K." to "Sarah" to the inquiring user ("You"). The middle section 714 can also display the relationship between seller and inquiring user in graphical format, such as by using the concentric circle paradigm shown in Fig. 7 (which was also described above in the context of the "Degree Out" criterion). The dot in the middle of the concentric circle corresponds to the inquiring user, while the dot on the outer periphery of the circle corresponds to the seller. The dot on the middle ring represents the intermediate member (Sarah) who links the inquiring user to the seller. The concentric circle paradigm is merely illustrative; other graphical paradigms, such as a genealogical-type tree structure, pyramid-type structure, overlapping circle paradigm (e.g., similar to the Venn diagram format shown in Fig. 1), etc., can be used to illustrate the links between members. Whatever format is used to convey the relationship, this information may be very beneficial, as it allows the inquiring user to assess, at a mere glance, whether their relationship to the announcement-originating member satisfies a desired level of trust.

The "circle of trust" mechanism can also be modified to incorporate additional functionality. For instance, this mechanism can incorporate functionality that allows a user to "click and drag" members from one circle of trust to another, e.g., based on the user's independent assessment that the displayed level of trust is not appropriate. This may have the effect, in one case, of adding a remote member to the inquiring user's buddy list, removing a member from the inquiring user's buddy list, and so forth. Still other variations of this paradigm are possible. For example, clicking on a circle can activate a list of the members encompassed by that circle, and so forth.

Finally, a bottom section 716 of the fourth field 708 allows the user to view items for sale by Joseph K.'s friends, thus extending the pool of items from which the inquiring user may select, and also extending the order of relationship with respect to the inquiring user an additional degree out.

To repeat, the style, organization, and content of the marketplace pane 700 is illustrative and non-limiting. Numerous variations of the concepts set forth above are possible.

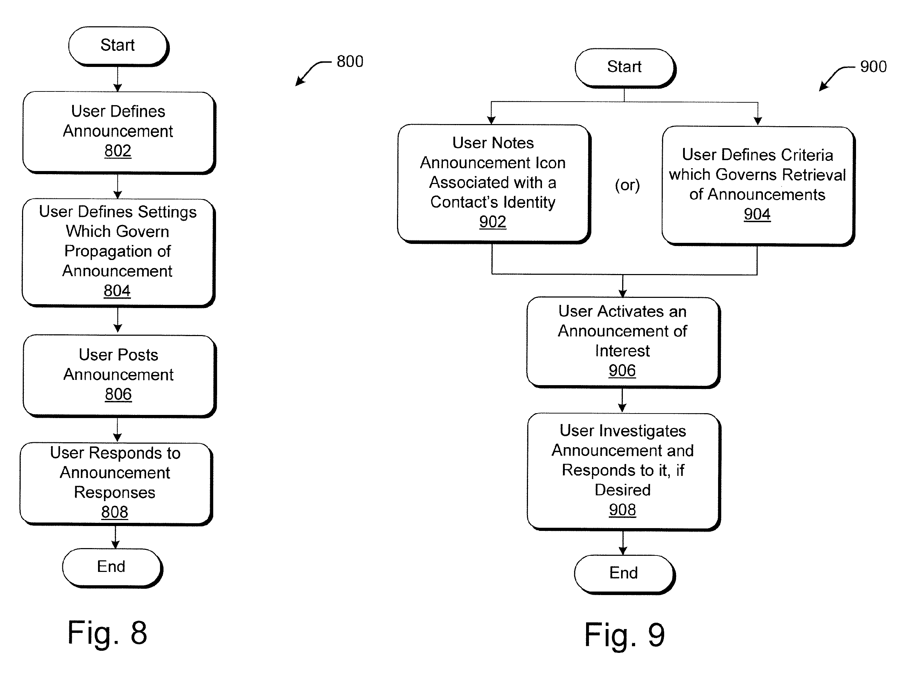

### C. Exemplary Method of Operation (Figs. 8 and 9)

Figs. 8 and 9 together describe the operation of the AR functionality 200 in flow chart form. To facilitate discussion, certain operations are described as constituting distinct steps performed in a certain order. Such implementations are exemplary and non-limiting. Certain steps described herein can be grouped together and performed in a single operation, and certain steps can be performed in an order that differs from the order employed in the examples set forth in this disclosure. As the functions performed by the AR functionality 200 have been fully explicated in prior sections, this section will serve primarily as a review of those functions. Figs. 8 and 9 are described in the context of the sale of an article or service, but the steps outlined in these procedures apply to any kind of announcement generated in any context.

Procedure 800 of Fig. 8 shows operations that can take place from the vantage point of a creator of an announcement (e.g., an announcement-originator).

In step 802, the announcement-originator defines the content of an announcement. In step 804, the user defines the criteria that will govern the dissemination of the announcement. Such criteria may pertain to the categories of members that may receive the announcement (family, friend, co-workers, etc.) and/or how far the user wishes the announcement to propagate within the web of interrelated social groups. In step 806, the user posts the completed announcement. Fig. 4 shows one user interface mechanism 400, among many potential others, that can be used to create and post an announcement.

In step 808, the user can address any responses to the created announcement that may have been received. In one case, the user can perform this task by activating the user's own announcement (or announcements) to determine what types of responses have been logged by other users. (For example, in the context of Fig. 4, Alice's IM pane 402 can include AR information that alerts Alice to the fact that she has created an announcement, similar to AR information 506; Alice can activate the announcement by activating that AR information). Upon reviewing the response, the user may then take appropriate action, such as selling an item to the member who has responded.

Procedure 900 of Fig. 9 shows operations that can take place from the vantage point of a consumer of an announcement. In step 902, one way that the consumer can be alerted to the existence of an announcement is via AR information that is displayed in proximity to identity-related information associated with the announcement-originator. Fig. 5 shows an example of this provision, where the AR information 506 is displayed on the consumer's IM pane 502 adjacent to the alias of the seller. The AR functionality 200 can also be configured to display the AR information 506 in other applications that provide contact information associated with the seller (such as an Email application).

Alternatively, in step 904, the consumer can perform a more comprehensive retrieval of announcements that meet defined criteria. Fig. 7 shows one such marketplace pane 700 for retrieving announcements in this mode.

In step 906, the consumer can activate one or more announcements of interest. This action can yield addition information regarding the item of interest, as well additional information regarding the seller of the item.

In step 908, the consumer investigates the announcement based on the supplemental information that is provided, and, if so desired, responds to the item (e.g., by purchasing the item).

### D. Exemplary Computer Environment (Fig. 10)

In one exemplary implementation, certain aspects of the AR functionality 200 can be implemented as computer code executed by one or more computer devices. For example, server machines associated with the head-end infrastructure 310 can be implemented by one or more computer devices. Also, the client devices (302, 304, ... 306) can be implemented by computer devices. In this case, Fig. 10 also provides information regarding an exemplary computer environment 1000 that can be used to implement any such computer device.

The computing environment 1000 includes a general purpose or sever type computer 1002 and a display device 1004. However, the computing environment 1000 can include other kinds of computing equipment. For example, although not shown, the computer environment 1000 can include hand-held or laptop devices, set top boxes, game consoles, mainframe computers, etc. Further, Fig. 10 shows elements of the computer environment 1000 grouped together to facilitate discussion. However, the computing environment 1000 can employ a distributed processing configuration. In a distributed computing environment, computing resources can be physically dispersed throughout the environment.

Exemplary computer 1002 includes one or more processors or processing units 1006, a system memory 1008, and a bus 1010. The bus 1010 connects various system components together. For instance, the bus 1010 connects the processor 1006 to the system memory 1008. The bus 1010 can be implemented using any kind of bus structure or combination of bus structures, including a memory bus or memory controller, a peripheral bus, an accelerated graphics port, and a processor or local bus using any of a variety of bus architectures.

Computer 1002 can also include a variety of computer readable media, including a variety of types of volatile and non-volatile media, each of which can be removable or non-removable. For example, system memory 1008 includes computer readable media in the form of volatile memory, such as random access memory (RAM) 1012, and non-volatile memory, such as read only memory (ROM) 1014. ROM 1014 includes an input/output system (BIOS) 1016 that contains the basic routines that help to transfer information between elements within computer 1002, such as during start-up. RAM 1012 typically contains data and/or program modules in a form that can be quickly accessed by processing unit 1006.

Other kinds of computer storage media include a hard disk drive 1018 for reading from and writing to a non-removable, non-volatile magnetic media, a magnetic disk drive 1020 for reading from and writing to a removable, non-volatile magnetic disk 1022 (e.g., a "floppy disk"), and an optical disk drive 1024 for reading from and/or writing to a removable, non-volatile optical disk 1026 such as a CD-ROM, DVD-ROM, or other optical media. The hard disk drive 1018, magnetic disk drive 1020, and optical disk drive 1024 are each connected to the system bus 1010 by one or more data media interfaces 1028. Alternatively, the hard disk drive 1018, magnetic disk drive 1020, and optical disk drive 1024 can be connected to the system bus 1010 by a SCSI interface (not shown), or other coupling mechanism. Although not shown, the computer 1002 can include other types of computer readable media, such as magnetic cassettes or other magnetic storage devices, flash memory cards, CD-ROM, digital versatile disks (DVD) or other optical storage, electrically erasable programmable read-only memory (EEPROM), etc.

Generally, the above-identified computer readable media provide non-volatile storage of computer readable instructions, data structures, program modules, and other data for use by computer 1002. For instance, the readable media can store the operating system 1030, application-specific functionality 1032 (including functionality for implementing aspects of the AR functionality 200), other program modules 1034, and program data 1036.

The computer environment 1000 can include a variety of input devices. For instance, the computer environment 1000 includes the keyboard 1038 and a pointing device 1040 (e.g., a "mouse") for entering commands and information into computer 1002. The computer environment 1000 can include other input devices (not illustrated), such as a microphone, joystick, game pad, satellite dish, serial port, scanner, card reading devices, digital or video camera, etc. Input/output interfaces 1042 couple the input devices to the processing unit 1006. More generally, input devices can be coupled to the computer 1002 through any kind of interface and bus structures, such as a parallel port, serial port, game port, universal serial bus (USB) port, etc.

The computer environment 1000 also includes the display device 1004. A video adapter 1044 couples the display device 1004 to the bus 1010. In addition to the display device 1004, the computer environment 1000 can include other output peripheral devices, such as speakers (not shown), a printer (not shown), etc.

Computer 1002 operates in a networked environment using logical connections to one or more remote computers, such as a remote computing device 1046. The remote computing device 1046 can comprise any kind of computer equipment, including a general purpose personal computer, portable computer, a server, etc. Remote computing device 1046 can include all of the features discussed above with respect to computer 1002, or some subset thereof.

Any type of network 1048 can be used to couple the computer 1002 with remote computing device 1046, such as the WAN 402 of Fig. 4, a LAN, etc. The computer 1002 couples to the network 1048 via network interface 1050 (e.g., the interface 416 shown in Fig. 4), which can utilize broadband connectivity, modem connectivity, DSL connectivity, or other connection strategy. Although not illustrated, the computing environment 1000 can provide wireless communication functionality for connecting computer 1002 with remote computing device 1046 (e.g., via modulated radio signals, modulated infrared signals, etc.).

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A method for communicating within an environment having pre-established social groups, comprising:
creating an announcement by a member of a first-order social group, the member being referred to as an announcement-originating member;
associating the announcement with an identity of the announcement-originating member; and
propagating the announcement to at least other members of the first-order social group.

2. The method of claim 1, wherein members of the first-order social group are linked to other social groups through respective chains of association, and wherein the creating defines whether the announcement is restricted to the first-order social group or whether it can be propagated to the other social groups.

3. The method of claim 2, wherein the creating further defines a degrees-of-relationship parameter that governs the extent to which the announcement is propagated out along a chain of linked social groups.

4. The method of claim 2, wherein the creating further defines an amount of announcement information that is propagated to the other social groups relative to the first-order social group.

5. The method of claim 2, wherein, if the announcement is permitted to be propagated to the other social groups, the propagating comprises propagating the announcement to the members of the other social groups.

6. The method of claim 1, wherein the announcement that is created pertains to an offer to confer something of benefit to other members.

7. The method of claim 1, wherein the announcement that is created pertains to a request to receive something of benefit from other members.

8. The method of claim 1, wherein the propagating comprises alerting the other members to the existence of the announcement by presenting announcement-related information in association with identity-related information that identifies the announcement-originating member.

9. The method of claim 8, wherein the first-order social group pertains to an instant messenger social group, and wherein the announcement-related information comprises information that identifies the announcement and the identity-related information comprises information that identifies the announcement-originating member within a listing of members in the first-order social group.

10. The method of claim 8, further comprising responding to the announcement by activating the announcement-related information.

11. The method of claim 8, wherein the announcement received by other members of the first-order social group contains information that identifies the trustworthiness of the announcement-originating member.

12. The method of claim 1, further comprising investigating, by any member of the first-order social group, announcements issued by any other member of the first-order social group.

13. The method of claim 12, wherein the members of the first order social group are linked to other social groups through respective chains of association, and wherein the investigating further comprises investigating announcements issued by other members in other social groups.

14. The method of claim 13, wherein a defined degrees-of-relationship criterion governs a reach of the investigation out along a chain of linked social groups.

15. One or more machine-readable media containing machine readable instructions for implementing the method of claim 1.

16. Announcement-related functionality including logic configured to implement the method of claim 1.

17. Announcement-related functionality for communicating within an environment having pre-established social groups, comprising:
an announcement creation module configured to: (a) create an announcement by a member of a first-order social group, the member being referred to as an announcement-originating member; and (b) associate the announcement with an identity of the announcement-originating member; and
an announcement propagation module configured to propagate the announcement to members of the first-order social group and/or members of linked social groups.

18. The announcement-related functionality of claim 17, wherein the announcement propagation module is further configured to receive a response to the announcement.

19. The announcement-related functionality of claim, wherein the first-order social group comprises an instant messenger communication group.

20. A system for communicating within an environment having pre-established social groups, comprising:
a plurality of devices operated by members of a first-order social group;
a coupling mechanism for coupling the plurality of devices together; and
announcement-related functionality configured to:
(a) create an announcement by a member of a first-order social group, the member being referred to as an announcement-originating member;
(b) associate the announcement with an identity of the announcement-originating member; and
(c) propagate the announcement to other members of the first-order social group and/or members of linked social groups.
